# EUROPÄISCHE PATENTSCHRIFT

(11) **EP 0 458 012 B1**
(45) Veröffentlichungstag und Bekanntmachung des Hinweises auf die Patenterteilung: **22.02.1995**
(21) Anmeldenummer: 91101850.5
(22) Anmeldetag: 09.02.1991
(51) Int. Cl.: B29C 47/24, B29C 47/00, H02G 1/08, G02B 6/44, H02G 9/06, F16L 11/12

(54) **Kabelführungseinrichtung und Verfahren zur Herstellung**
Cable guidance device and method of manufacturing
Dispositif de guidage de câble et procédé de fabrication

(30) Priorität: 24.05.1990 DE 4016726
(43) Veröffentlichungstag der Anmeldung: 27.11.1991
(73) Patentinhaber: Dipl.-Ing. Dr. Ernst Vogelsang GmbH & Co. KG, D-45699 Herten (DE)
(72) Erfinder: Bergmann, Horst, W-6113 Babenhausen (DE); Vogelsang, Horst, W-4352 Herten (DE)
(74) Vertreter: Andrejewski, Walter

(56) Entgegenhaltungen:
- DE-A- 1 808 271
- DE-A- 1 808 271
- US-A- 3 496 605
- US-A- 3 496 605
- US-A- 3 666 389
- US-A- 3 666 389
- US-A- 4 688 890
- US-A- 4 892 442

## Beschreibung

Die Erfindung betrifft eine Kabelführungseinrichtung gemäß Oberbegriff des Anspruchs 1. Eine solche Kabelführungseinrichtung ist z. B. aus der DE-A-3 529 541 bekannt. Die Erfindung betrifft fernerhin ein Verfahren zur Herstellung einer solchen Kabelführungseinrichtung. - Der Begriff Kabelführungseinrichtung bezeichnet z. B. einzelne Kabelführungsrohre (vgl. DE 35 29 541), aber auch Kabelführungsrohraggregate (vgl. DE 32 17 401). Das Kabelführungsrohr bzw. die Kabelführungsrohre der Kabelführungseinrichtung nehmen einzelne Kabel oder Kabelbündel auf, die schiebend oder ziehend eingeführt werden müssen.

Bei der bekannten Kabelführungseinrichtung, von der die Erfindung ausgeht (DE 35 29 541), besitzen die Gleitrippen, bezogen auf die Kabelführungskanalachse und in Richtung der Kabelführungskanalachse, eine konstante Richtung. Sie verlaufen beispielsweise schraubenwendelförmig, über die gesamte Länge der Kabelführungseinrichtung linksdrehend oder rechtsdrehend. Der Reibungswiderstand, den ein Kabel oder ein Kabelbündel beim Einbringen in eine solche Kabelführungseinrichtung erfährt, wird durch diese Gleitrippen beachtlich reduziert. Das hat sich für viele Anwendungsfälle bewährt und erleichtert das Einziehen oder Einschieben der Kabel bzw. Kabelbündel. Es kann jedoch, je nach der Gestaltung des Kabels oder des Kabelbündels, vorkommen, daß aus der Wechselwirkung eines Kabels oder eines Kabelbündels mit den Gleitrippen tordierende Kräfte auf das Kabel bzw. das Kabelbündel einwirken und eine störende und erheblich bremsende Tordierung des Kabels oder des Kabelbündels bewirken.

Der Erfindung liegt die Aufgabe zugrunde, eine Kabelführungseinrichtung des eingangs beschriebenen Aufbaus zu schaffen, die so eingerichtet ist, daß störende tordierende Kräfte auf ein einzuschiebendes oder einzuziehendes Kabel oder Kabelbündel nicht mehr einwirken. Der Erfindung liegt fernerhin die Aufgabe zugrunde, ein Verfahren zur Herstellung solcher Kabelführungseinrichtungen anzugeben.

Zur Lösung dieser Aufgabe lehrt die Erfindung, daß die Gleitrippen, bezogen auf die Kabelführungskanalachse und in Richtung der Kabelführungskanalachse, eine alternierende Richtung aufweisen. Alternierende Richtung bedeutet, daß der Verlauf der Gleitrippen, betrachtet in einer Projektion auf die Kabelführungskanalachse, unterschiedlich ist, z. B. einmal von links nach rechts, einmal von rechts nach links weist. Nach bevorzugter Ausführungsform der Erfindung ist die Anordnung so getroffen, daß die Gleitrippen außerdem eine in Richtung der Kabelführungskanalachse abschnittsweise unterschiedliche Steigung aufweisen.

Überraschenderweise werden bei der beschriebenen Gestaltung und Ausbildung der Kabelführungseinrichtung störende tordierende Kräfte auf ein einzuziehendes oder einzuschiebendes Kabel bzw. auf ein einzuziehendes oder einzuschiebendes Kabelbündel nicht mehr ausgeübt. Die aus der Reibungswechselwirkung eines Kabels bzw. eines Kabelbündels mit den Gleitrippen resultierenden Kräfte lassen störende Tordierungen des Kabels bzw. des Kabelbündels nicht mehr aufkommen oder heben sich, je nach der Gestaltung, auch vollständig auf.

Im Rahmen der Erfindung bestehen mehrere Möglichkeiten der weiteren Ausbildung und Gestaltung. Eine bevorzugte Ausführungsform der Erfindung, der besondere Bedeutung zukommt, ist dadurch gekennzeichnet, daß die Gleitrippen in Längsrichtung der Kabelführungseinrichtung aufeinander folgende Gleitbereiche mit schraubenwendelförmig geführten Gleitrippenabschnitten bilden, die gegenläufigen Wendelsinn aufweisen, und daß diese Gleitbereiche durch Übergangsbereiche mit durchlaufenden Gleitrippen verbunden sind. Die Gleitrippen können in bezug auf die Wechselwirkung mit einem einzuziehenden oder einzuschiebenden Kabel oder mit einem einzuziehenden oder einzuschiebenden Kabelbündel tordierungsunterdrückend ausgebildet sein. Das ist beispielsweise dann der Fall, wenn die Gleitbereiche und die Übergangsbereiche alle gleich lang sind und in der gleichen Weise mit Gleitrippen versehen sind, die jedoch von Gleitbereich zu Gleitbereich in der beschriebenen Weise unterschiedliche Richtungen aufweisen.

Nach einem anderen Vorschlag der Erfindung, dem ebenfalls besondere Bedeutung zukommt, verlaufen die Gleitrippen schlangenlinienförmig.

Im einzelnen bestehen im Rahmen der Erfindung mehrere Möglichkeiten der weiteren Ausbildung und Gestaltung. So können die Gleitrippen einen dreieckförmigen oder bogenförmigen Querschnitt aufweisen. Sie besitzen zweckmäßigerweise eine Gleitrippenhöhe, die einen Bruchteil der Wanddicke des Kabelführungsrohres ausmacht. Es empfiehlt sich, die Anordnung so zu treffen, daß die Gleitrippen eine Gleitrippenbreite, an der Gleitrippenbasis gemessen, aufweisen, die ebenfalls nur einen Bruchteil der Wanddicke des Kabelführungsrohres ausmacht. Es empfiehlt sich fernerhin, zwischen den Gleitrippen Rillen anzuordnen, die gleichsam eine Inversion der Gleitrippen darstellen.

Im Rahmen der Erfindung können die Gleitrippen nahtlos aus dem Kunststoff des Kabelführungsrohres geformt sein. Die Gleitrippen können aber auch auf die Kanalinnenwand aufgelegt und mit dieser stoffschlüssig verschweißt sein. Bei dieser Ausführungsform besteht fernerhin die Möglichkeit, die Gleitrippen aus einem Kunststoff zu bilden, der gleitfähiger ist als der thermoplastische Kunststoff des Kabelführungsrohres.

Von besonderem Vorteil ist die Tatsache, daß die erfindungsgemäßen Kabelführungseinrichtungen auf sehr einfache Weise hergestellt werden können. Gegenstand der Erfindung sind auch solche Herstellungsverfahren. Zu diesen gehört grundsätzlich, daß ein thermoplastischer Kunststoff mit Hilfe eines Extruders thermoplastifiziert und das Kunststoffrohr über ein angeschlossenes Strangpreßwerkzeug mit Außenwerkzeug und mit einem den Kabelführungskanal bildenden Dorn stranggepreßt sowie in einer Außenkalibriereinrichtung kalibriert wird. Die Gleitrippen werden dabei mit Hilfe eines in dem Dorn gelagerten, drehangetriebenen Gleitrippenwerkzeuges geformt, welches mit alternierendem Drehsinn und ggf. unterschiedlicher Drehgeschwindigkeit bewegt wird. Dabei kann mit einem Gleitrippenwerkzeug gearbeitet werden, welches als Verdrängerwerkzeug, gleichsam ohne Spanbildung, ausgeführt ist. Darunter wird verstanden, daß sich der noch sehr weiche Werkstoff vor dem Gleitrippenwerkzeug nicht abschält. Es kann aber auch mit einem Gleitrippenwerkzeug gearbeitet werden, mit dem thermoplastifizierter Kunststoff gleitrippenbildend auf die Kanalinnenwand stoffschlüssig aufgelegt, d. h. mit der Kanalinnenwand verschweißt wird.

Im folgenden wird die Erfindung anhand einer lediglich ein Ausführungsbeispiel darstellenden Zeichnung ausführlicher erläutert. Es zeigen in schematischer Darstellung
- Fig. 1: die Seitenansicht einer erfindungsgemäßen Kabelführungseinrichtung, ausschnittsweise und teilweise aufgebrochen,
- Fig. 2: eine andere Ausführungsform des Gegenstandes der Fig. 1 aus Richtung der Pfeiles A,
- Fig. 3: den vergrößerten Ausschnitt B aus dem Gegenstand nach Fig. 2,
- Fig. 4: eine Abwicklung eines Kabelführungsrohres aus einer erfindungsgemäßen Kabelführungseinrichtung, ausschnittsweise,
- Fig. 5: entsprechend der Fig. 4 eine andere Ausführungsform einer erfindungsgemäßen Kabelführungseinrichtung,
- Fig. 6: eine andere Ausführungsform des Gegenstandes der Fig. 3.

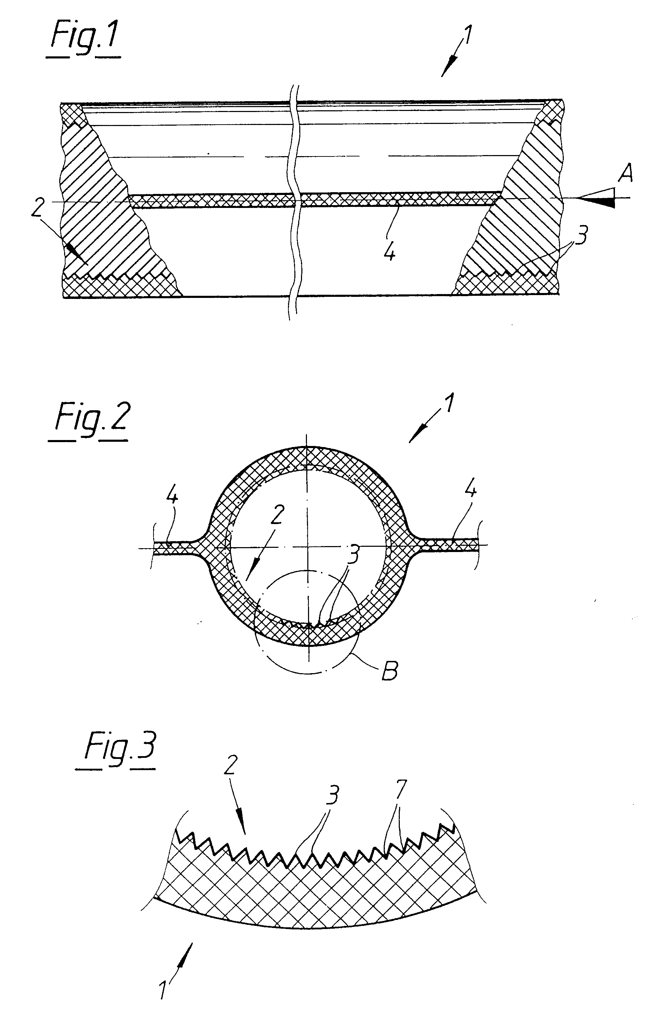

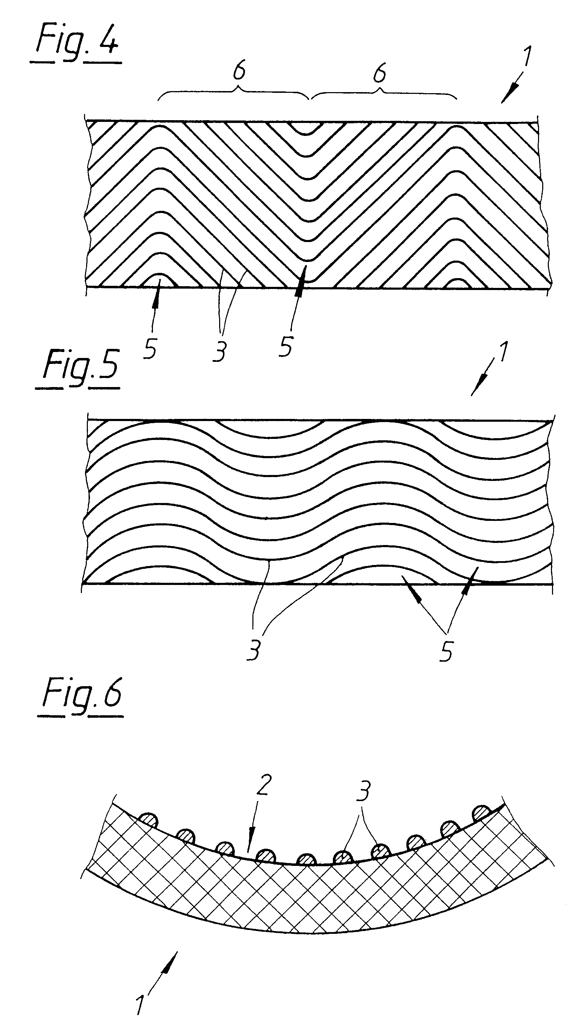

Die in den Fig. 1 bis 6 dargestellte Kabelführungseinrichtung besitzt zumindest ein Kabelführungsrohr 1 aus thermoplastischem Kunststoff, welches einen im Querschnitt runden Kabelführungskanal und eine Kanalinnenwand 2 mit zueinander parallel verlaufenden Gleitrippen 3 aufweist. In der Fig. 1 ist dieses Kabelführungsrohr 1 links und rechts aufgebrochen. In der Fig. 2 erkennt man an das Kabelführungsrohr 1 angeschlossene Stege 4, über die weitere nicht gezeichnete Kabelführungsrohre angeschlossen und zu einer erfindungsgemäßen Kabelführungseinrichtung in Form eines Kabelführungsrohraggregates vereinigt sind. Die Fig. 4 und 5 zeigen Abwicklungen eines Kabelführungsrohres in einem anderen Maßstab als die Fig. 1 bis 3 sowie 6, wobei jedoch die Gleitrippen 3 zur Verdeutlichung auseinandergezogen worden sind. In den Fig. 4 und 5 sind nur die Gleitrippenkämme angedeutet.

Vergleicht man die Fig. 1 sowie 4 und 5, so erkennt man, daß die Gleitrippen 3, bezogen auf die Kabelführungskanalachse und in Richtung der Kabelführungskanalachse, eine alternierende Richtung aufweisen. Die Gleitrippen 3 können außerdem eine in Richtung der Kabelführungskanalachse abschnittsweise unterschiedliche Steigung aufweisen. In der Fig. 1 ist verdeckt, wie bei Richtungsänderungen die Gleitrippen 3 geführt sind. Die Fig. 4 und 5 machen dieses deutlich. Bei Richtungsänderungen der Gleitrippen 3 finden danach kontinuierliche Übergänge 5 statt.

Insbesondere aus der Fig. 4 entnimmt man, daß die Gleitrippen 3 Gleitbereiche 6 mit schraubenwendelförmig geführten Gleitrippenabschnitten bilden, die gegenläufigen Wendelsinn aufweisen, wobei diese Gleitbereiche durch Übergänge 5 verbunden sind. Die Anordnung ist so getroffen, daß die Gleitrippen 3 in bezug auf die Wechselwirkung mit einem einzuziehenden oder einzuschiebenden Kabel bzw. in bezug auf die Wechselwirkung mit einem einzuziehenden oder einzuschiebenden Kabelbündel torsionsunterdrückend ausgebildet sind. Die Gleitbereiche 6 sind dazu gleich lang und, bis auf die unterschiedliche Richtung, mit übereinstimmenden Gleitrippen 3 in bezug auf Form, Richtung und Anzahl ausgebildet.

Bei der Ausführungsform nach Fig. 5 sind die Gleitrippen 3 schlangenlinienförmig geführt.

Vergleicht man die Fig. 3 und 6, so erkennt man, daß die Gleitrippen 3 einen dreieckförmigen oder auch einen bogenförmigen Querschnitt aufweisen. Die Gleitrippen 3 besitzen eine Gleitrippenhöhe, die einen Bruchteil der Wanddicke des Kabelführungsrohres 1 ausmacht. Die Gleitrippen 3 besitzen im Ausführungsbeispiel fernerhin eine Gleitrippenbreite, die, an der Gleitrippenbasis gemessen, ebenfalls nur einen Bruchteil der Wanddicke des Kabelführungsrohres 1 ausmacht. In der Fig. 3 sind zwischen den Gleitrippen 3 Rillen 7 angeordnet, die gleichsam eine Inversion der Gleitrippen 3 darstellen. Bei der Ausführungsform nach den Fig. 1 bis 3 sind die Gleitrippen 3 nahtlos aus dem Kunststoff des Kabelführungsrohres geformt. Bei der Ausführungsform nach Fig. 6 sind die Gleitrippen 3 auf die Kanalinnenwand 2 aufgelegt und mit dieser stoffschlüssig verschweißt. Dabei kann auch mit unterschiedlichen Kunststoffen gearbeitet werden, insbesondere können die Gleitrippen 3 aus einem Kunststoff bestehen, der gleitfähiger ist als der thermoplastische Kunststoff des Kabelführungsrohres 1. - Die Darstellungen in den Fig. 4 und 5 lassen sich sowohl mit nahtlos geformten als auch aufgelegten Gleitrippen verwirklichen. Die Rillen 7 zwischen den Gleitrippen 3 können zur Vermeidung oder Reduzierung von Kerbspannungen bei mechanischen Beanspruchungen auch verrundet oder im Querschnitt trapezförmig gestaltet sein. Abschnitte, in denen die Gleitrippen parallel zur Achse des Kabelführungskanals verlaufen, können mit Abschnitten, die mehr oder weniger bogenförmig verlaufen, abwechseln.

## Patentansprüche

1. Aus Kunststoff bestehende, durch Extrudieren geformte Kabelführungseinrichtung mit zumindest einem Kabelführungsrohr (1) mit Einrichtung zur Erleichterung der einschiebenden oder einziehenden Kabeleinführung, dadurch gekennzeichnet, daß die Einrichtung aus kabelführungsrohrinnenseitigen, wellenförmig oder schlangenlinienförmig verlaufenden, torsionshemmenden Gleitrippen (3) besteht, welche beim Extrudieren angeformt sind.

2. Kabelführungseinrichtung nach Anspruch 1, dadurch gekennzeichnet, daß die Gleitrippen (3) einen dreieckförmigen oder bogenförmigen Querschnitt aufweisen.

3. Kabelführungseinrichtung nach einem der Ansprüche 1 oder 2, dadurch gekennzeichnet, daß die Gleitrippen (3) eine Gleitrippenhöhe aufweisen, die einen Bruchteil der Wanddicke des Kabelführungsrohres (1) ausmacht.

4. Kabelführungseinrichtung nach einem der Ansprüche 1 bis 3, dadurch gekennzeichnet, daß die Gleitrippen (3) eine Gleitrippenbreite an der Gleitrippenbasis gemessen, aufweisen, die einen Bruchteil der Wanddicke des Kabelführungsrohres (1) ausmacht.

5. Kabelführungseinrichtung nach einem der Ansprüche 1 bis 4, dadurch gekennzeichnet, daß zwischen den Gleitrippen (3) Rillen (7) angeordnet sind, die eine Inversion der Gleitrippen (3) darstellen.

6. Kabelführungseinrichtung nach einem der Ansprüche 1 bis 5, dadurch gekennzeichnet, daß die Gleitrippen (3) nahtlos aus dem Kunststoff des Kabelführungsrohres (1) geformt sind.

7. Kabelführungseinrichtung nach einem der Ansprüche 1 bis 5, dadurch gekennzeichnet, daß die Gleitrippen (3) auf die Kanalinnenwand (2) aufgelegt und mit dieser stoffschlüssig verschweißt sind.

8. Kabelführungseinrichtung nach Anspruch 7, dadurch gekennzeichnet, daß die Gleitrippen (3) aus einem Kunststoff bestehen, der gleitfähiger ist als der thermoplastische Kunststoff des Kabelführungsrohres (1).

9. Verfahren zur Herstellung einer Kabelführungseinrichtung nach einem der Ansprüche 1 bis 8, wobei ein thermoplastischer Kunststoff mit Hilfe eines Extruders thermoplastifiziert und das Kunststoffrohr (1) über ein angeschlossenes Strangpreßwerkzeug mit Außenwerkzeug und mit einem den Kabelführungskanal bildenden Dorn stranggepreßt sowie in einer Außenkalibriereinrichtung kalibriert wird, **dadurch gekennzeichnet**, daß die Gleitrippen (3) mit Hilfe eines in dem Dorn gelagerten, drehangetriebenen Gleitrippenwerkzeuges geformt werden, welches mit alternierendem Drehsinn und ggf. unterschiedlicher Drehgeschwindigkeit bewegt wird.

10. Verfahren nach Anspruch 9, dadurch gekennzeichnet, daß mit einem Gleitrippenwerkzeug gearbeitet wird, welches als Verdrängerwerkzeug, ohne Spanbildung, ausgeführt ist.

11. Verfahren nach Anspruch 9, dadurch gekennzeichnet, daß mit einem Gleitrippenwerkzeug gearbeitet wird, mit dem thermoplastifizierter Kunststoff gleitrippenbildend auf die Kanalinnenwand stoffschlüssig aufgelegt wird.

## Claims

1. A cable routing device consisting of plastic and formed by extrusion, having at least one cable conduit (1) with a device for facilitating the introduction of a cable being pushed in or pulled in, characterised in that the device consists of torsion-restricting sliding ribs (3) extending on the inside of the cable conduit in a wave-like or serpentine manner, which are integrally formed during extrusion.

2. A cable routing device according to claim 1, characterised in that the sliding ribs (3) have a triangular or arcuate cross-section.

3. A cable routing device according to either one of claims 1 or 2, characterised in that the sliding ribs (3) have a sliding rib height which is a fraction of the wall thickness of the cable conduit (1).

4. A cable routing device according to any one of claims 1 to 3, characterised in that the sliding ribs (3) have a sliding rib width, measured at the base of the sliding rib, which is a fraction of the wall thickness of the cable conduit (1).

5. A cable routing device according to any one of claims 1 to 4, characterised in that channels (7) which constitute an inversion of the sliding ribs (3) are disposed between the sliding ribs (3).

6. A cable routing device according to any one of claims 1 to 5, characterised in that the sliding ribs (3) are formed seamlessly from the plastic of the cable conduit (1).

7. A cable routing device according to any one of claims 1 to 5, characterised in that the sliding ribs (3) are placed on the inner wall (2) of the conduit and are welded to the latter with the formation of a material bond.

8. A cable routing device according to claim 7, characterised in that the sliding ribs (3) consist of a plastic which has a better sliding capacity than the synthetic thermoplastic material of the cable conduit (1).

9. A method of producing a cable routing device according to any one of claims 1 to 8, wherein a synthetic thermoplastic material is thermally plasticized with the aid of an extruder and the plastic conduit (1) is extruded over an attached extrusion die having an outer die and having a mandrel forming the cable conduit channel and is sized in an external sizing device, characterised in that the sliding ribs (3) are formed with the aid of a sliding rib tool which is mounted in the mandrel and driven in rotation and which is moved with an alternating direction of rotation and optionally with a different rotational speed.

10. A method according to claim 9, characterised in that a sliding rib tool is employed which is designed as a positive displacement tool, without the formation of cuttings.

11. A method according to claim 9, characterised in that a sliding rib tool is employed by means of which thermally plasticised plastic is laid on the inner wall of the conduit forming a material bond and forming sliding ribs.

## Revendications

1. Dispositif de guidage de câbles en matière plastique conformé par extrusion, comprenant au moins un tube de câbles (1) avec un dispositif pour faciliter l'entrée de câble par engagement ou par tirage, caractérisé par le fait que le dispositif de guidage de câbles comprend des nervures de glissement (3) empêchant la torsion, disposées du côté intérieur du tube de câbles et présentant une forme ondulée ou en serpentin, qui sont conformées lors de l'extrusion.

2. Dispositif de guidage de câbles selon la revendication 1, caractérisé par le fait que les nervures de glissement (3) présentent une section transversale en forme de triangle ou d'arc.

3. Dispositif de guidage de câble selon l'une des revendications 1 ou 2, caractérisé par le fait que les nervures de glissement (3) présentent une hauteur égale à une fraction de l'épaisseur de paroi du tube de câbles (1).

4. Dispositif de guidage de câbles selon l'une des revendications 1 à 3, caractérisé par le fait que les nervures de glissement (3) présentent une largeur, mesurée à la base desdites nervures de glissement, qui est égale a une fraction de l'épaisseur de paroi du tube de câbles (1).

5. Dispositif de guidage de câbles selon l'une des revendications 1 à 4, caractérisé par le fait qu'entre les nervures de glissement (3) sont disposées des gorges (7) qui représentent une inversion des nervures de glissement (3).

6. Dispositif de guidage de câbles selon l'une des revendications 1 à 5, caractérisé par le fait que les nervures de glissement (3) sont conformées sans soudure dans la matière plastique du tube de câbles (1).

7. Dispositif de guidage de câbles selon l'une des revendications 1 à 5, caractérisé par le fait que les nervures de glissement (3) sont posées sur la paroi intérieure (2) de la conduite de câbles et intégrées dans celle-ci.

8. Dispositif de guidage de câbles selon la revendication 7, caractérisé par le fait que les nervures de glissement (3) sont constituées d'une matière plastique dont le pouvoir d'anti-blocage est plus grand que celui de la matière thermoplastique du tube de câbles (1).

9. Procédé de fabrication d'un dispositif de guidage de câbles selon l'une des revendications 1 à 8, une matière thermoplastique étant thermoplastifiée à l'aide d'une extrudeuse, et le tube de matière plastique (1) étant extrudé par l'intermédiaire d'une filière raccordée avec un outil extérieur et un mandrin formant la conduite de câbles ainsi qu'un dispositif de calibrage extérieur, **caractérisé par le fait** que les nervures de glissement (3) sont formées à l'aide d'une filière à nervures de glissement placée dans le mandrin et entraînée en rotation, qui est entraînée alternativement dans les deux sens de rotation et éventuellement à des vitesses de rotation variables.

10. Procédé selon la revendication 9, caractérisé par le fait que l'on travaille avec une filière à nervures de glissement conformée en outil à déplacement, sans formation de copeaux.

11. Procédé selon la revendication 9, caractérisé par le fait qu'on travaille avec une filière à nervures de glissement par laquelle de la matière thermoplastifiée est appliquée sur la paroi intérieure de la conduite de façon à former des nervures de glissement intégrées.
